Europäisches Patentamt

European Patent Office

Office européen des brevets

(11) Publication number: 0 362 505
A1

## EUROPEAN PATENT APPLICATION

(21) Application number: 89113905.7

(22) Date of filing: 27.07.89

(51) Int. Cl.⁵: **B23C 5/22**

(30) Priority: 06.10.88 US 254066

(43) Date of publication of application:
11.04.90 Bulletin 90/15

(84) Designated Contracting States:
DE GB IT SE

(71) Applicant: **GTE VALENITE CORPORATION**
**750, Stephenson Highway P.O. Box 3950**
**Troy Michigan 48007(US)**

(72) Inventor: **Baker, Brian**
**3618 Hi-Villa Drive**
**Lake Orion, MI 48035(US)**

(74) Representative: **Patentanwälte Grünecker,**
**Kinkeldey, Stockmair & Partner**
**Maximilianstrasse 58**
**D-8000 München 22(DE)**

(54) Positive rake insert locating means.

(57) In combination, a positive rake single cutting edge insert (12) having neutral or negative inactive sides for engaging acute angle shoulder pockets with a central hold down screw (21) urging the insert (12) against shoulder walls (19) of the pocket. Better retention for the insert is provided by avoiding obtuse retention wall surfaces in the body, typical of positive rake inserts.

FIG.1

## POSITIVE RAKE INSERT LOCATING MEANS

### BACKGROUND OF THE INVENTION

In the application of throwaway tungsten carbide tips for high speed milling cutters, conventionally accepted design may involve the use of a positive rake insert with 7° or 11° clearance which is tipped on one corner with polycrystalline diamond. The effective cutting geometries and edge preparations are then ground into the diamond tip, thus making it a single cutting edge insert. Accordingly, the other sides, three in the case of a square insert, are never used in the cutting mode. Conventional practice involves location of one or two of such unused positive rake side walls of the insert to locate in cutter body pockets having matching angular walls. A hold down screw passing through the center of the insert normally includes a tapered head offset to urge the insert against the retaining wall(s) with a resulting compressive force, subject, however, to a component of force in a lifting direction relative to the insert seat. While such practice is accepted in the case of indexable inserts where uniformity of side geometry leads to positive rake holder pocket retention walls, adaptation of such inserts to single cutting edge usage has rendered available more secure insert locating means of the present invention.

### SUMMARY OF THE PRESENT INVENTION

In the insert locating means disclosed herein, sides for noncutting edges are provided with zero or alternatively negative clearance, utilizing an insert pocket in the milling cutter having an 89°, or less, included angle for the pocket walls. This results in better retention for the insert, especially effective when subjected to high centrifugal forces encountered in high speed milling. In combination with the conventional offset screw system of retention, the insert is forced against the back securing wall(s), and due to the acute angle of the wall, the insert is held down in the pocket and naturally trapped.

### BRIEF DESCRIPTION OF THE DRAWINGS

Fig. 1 is a sectional schematic view of a milling cutter illustrating, on opposite sides respectively, inserts located with conventional design and with the new locating means of the present invention;

Fig. 2 is a sectional view taken along the line 2-2 of Fig. 1;

Figs. 3A and 3B are fragmentary sectional views taken along the line 3-3 of Fig. 1 illustrating alternative locating means of the present invention.

### DETAILED DESCRIPTION OF PREFERRED EMBODIMENT

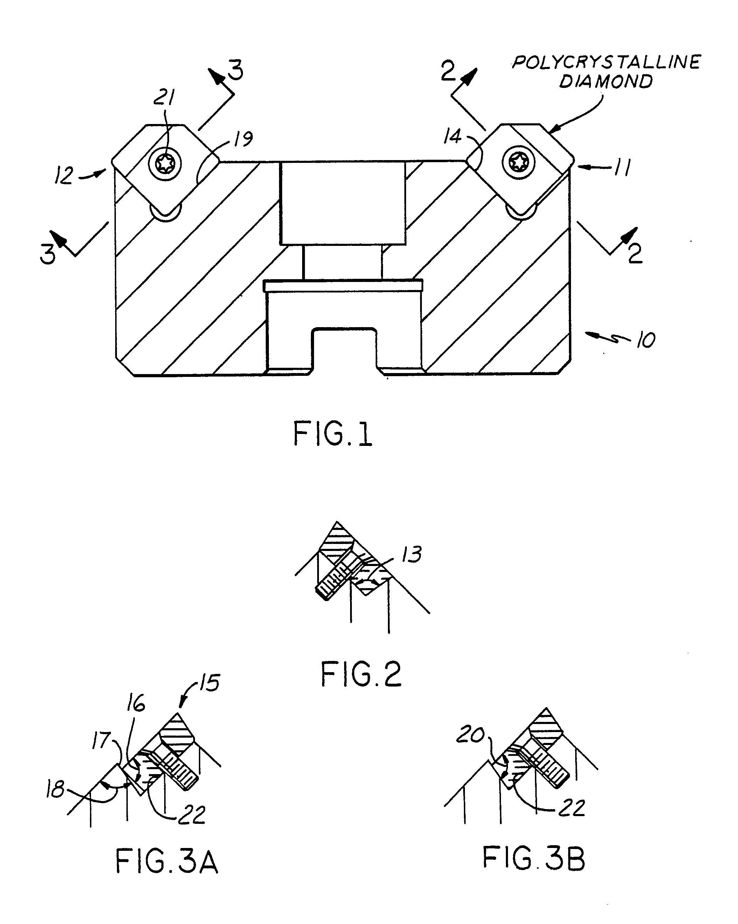

In Fig. 1, milling cutter 10 is schematically illustrated with conventionally located insert 11, for rotational milling in one direction, while the equivalent insert of the present invention is illustrated, to facilitate comparison, as installed for rotation in an opposite direction. In plan view of the exposed face of the insert, there is no apparent difference; however, as indicated in the fragmentary sectional view of Fig. 2, the four-side walls of the insert are symmetrical with equal positive rake clearance angles matching the obtuse angle 13 between the body seat and wall it being understood that like insert and pocket wall angles are employed at the shoulder wall 14.

With reference to Fig. 3A, the locating inactive walls of insert 15 are each provided with a 90° angle 16 engaging a wall 17 having an 89° angle 18 (exaggerated for clarity) with a similar angular configuration employed at shoulder 19.

In the modification of Fig. 3B, each of the locating walls of the insert is provided with a negative rake angle 20 to more precisely nest in the acute angle walls of the pocket resulting in maximum retention.

In each case, a screw 21 extending through the center of the insert is offset to urge the insert against the corner pocket walls of the body in a conventional manner with a different result however between the Fig. 2 and Fig. 3 locating means. Thus with the conventional design of Fig. 2, outward component of force incident to lateral screw pressure, axial cutting thrust, and centrifugal force tend to raise the insert off its seat; whereas in the configurations of Figs. 3 and 3B, corresponding screw and cutting components urge the insert against respective seats 22. Accordingly, lateral forces from both screw pressure and axial cutting thrust more effectively trap the insert against displacement from high speed centrifugal forces.

### Claims

1. In combination, a positive rake single cutting edge insert having angularly related seating and side locating surfaces, a holder with pocket having angularly related insert seat and shoulder surfaces engaged by said locating surfaces, an included angle of said locating surfaces being equal to or less than 90°, a mating included angle of said seat and shoulder surfaces being less than 90°, and screw means extending through an aperture in said insert engaging a threaded hole in said seat with a tapered screw head adapted upon tightening to force said insert laterally along said seat against said shoulder, whereby compressive forces between said insert and shoulder arising from screw tightening or axial cutting pressures will effectively trap said insert with no force component tending to raise said insert from said seat, notwithstanding the positive rake geometry of said cutting edge.

2. The combination of claim 1 wherein said locating surfaces have a right angle relation.

3. The combination of claim 1 wherein said locating surfaces have an acute angle relationship.

4. The combination of claim 3 wherein said seat and shoulder surfaces have a matching acute angle relationship.

5. The combination of claim 1 wherein corner seat and shoulder surfaces are provided in said pocket for engaging two inactive sides of said insert.

POLYCRYSTALLINE
DIAMOND

FIG.1

FIG.2

FIG.3A

FIG.3B

| DOCUMENTS CONSIDERED TO BE RELEVANT | | | EP 89113905.7 |
|---|---|---|---|
| Category | Citation of document with indication, where appropriate, of relevant passages | Relevant to claim | CLASSIFICATION OF THE APPLICATION (Int. Cl. X 5) |
| X | <u>US - A - 3 906 602</u><br>(KUMMER)<br> * Fig. 7,8 * | 1,3,4,5 | B 23 C 5/22 |
| X | <u>GB - A - 1 527 092</u><br>(R. ZAPP)<br> * Fig. 5,6 * | 1,3,4 | |
| X | <u>US - A - 3 533 150</u><br>(J. WELCH)<br> * Fig. 2,3; column 2, lines 47,48 * | 1,2 | |
| X | <u>DE - B - 1 502 048</u><br>(R. ZAPP)<br> * Claim 1; fig. 4 * | 1 | |
| X | <u>DE - A - 2 231 550</u><br>(K. HERTEL)<br> * Fig. 1 * | 1 | |
| A | <u>US - A - 3 323 192</u><br>(M.W. GUSTAFSON)<br> * Fig. 1 * | 1,3 | TECHNICAL FIELDS SEARCHED (Int. Cl.4)<br><br>B 23 C 5/00<br>B 23 B 27/00 |

The present search report has been drawn up for all claims

| Place of search | Date of completion of the search | Examiner |
|---|---|---|
| VIENNA | 20-12-1989 | NIMMERRICHTER |